# EUROPEAN PATENT APPLICATION

(11) **EP 2 385 327 A1**
(43) Date of publication of application: **09.11.2011**
(21) Application number: 10382111.2
(22) Date of filing: 06.05.2010
(51) Int. Cl.: F24J 2/54

(54) **One-way solar tracker**

(71) Applicant: Renovalia Energy, S.A., 28006 Madrid (ES)
(72) Inventor: Parra Cebrian, Vicente, 28006, Madrid (ES); Rojas Gomez, Manuel, 28006, Madrid (ES)
(74) Representative: Martin Santos, Victoria Sofia

(57) **Abstract**

The purpose of this invention is to present a one-way solar tracker comprising a group of ground anchoring structures (1) and a group of support structures (2) for solar panels (3) characterised in that the anchoring structures are joined by means of a set of flexible transfer means (4) which transfer movement to the support structures (2) of the solar panels (3) in such a way that said support structures (2) rotate round a rotation axis (7) of the ground anchoring structures (1).

## Description

### OBJECT OF THE INVENTION

The purpose of this invention is a one-way solar tracker which permits its installation on all kinds of terrain reducing the torque to be applied in turning the solar panels.

Due to the special configuration of the tracker, it is adapted to any contours of the terrain, so that there is no need to carry out any action on the terrain in order to install it.

In addition, due to the configuration of the panel support structure, the one-way solar tracker reduces the torque which needs to be applied to the group of panels in order to rotate them.

### BACKGROUND TO THE INVENTION

Solar trackers are known in the state of the art having an axis formed by one or various primary structures which are anchored to the terrain where they are installed, and having secondary structures which are arranged on the aforesaid primary structure and which carry out an azimuth rotation movement, following the sun from east to west throughout the day, so that photovoltaic panels arranged on said structures permit solar energy to be captured.

As a general rule, these systems have secondary structures which support photovoltaic panels arranged in columns where each of said structures is provided with a rotation axis which is normally arranged in a North-south direction in such a way that said secondary structure is able to rotate from one position at the start of the day where the panels are oriented eastwards to a final position at the end of the day where the panels are oriented westwards all of which is designed to ensure that at any time of day the panels are as perpendicular as possible to the direction of the sun's rays and thus obtaining maximum efficiency.

One example of an earlier system of this type is Spanish patent ES2232442T3 for a solar collector in which all the secondary structures share the same means of activation and where it is not possible to install the primary structures on uneven terrain, due to their configuration, where each of the secondary structures are joined by means of bars rigid to the adjacent ones, excluding the possibility of installing the solar collector in uneven terrain.

In addition, in the case of using articulated rigid bars in each of the secondary structures it is not possible to maintain the same separating distance between panels with the use of bars of the same length, as the existing slope between each two secondary structures varies depending on the inclination of the terrain, thus in order to overcome very uneven areas it is necessary to use larger connection bars.

As a result, this leads to a situation where connection bars of different lengths are required, and thus it is necessary to have calculated the undulation of the terrain beforehand, in order to install bars which will be adapted to each of the parts of said terrain, with these bars being unusable anywhere else as the contours of the terrain would differ.

In addition, there are other solar collector systems where each of the secondary structures is provided with associated means of action which should be synchronised with each other in order to follow the sun, where it is not possible to orientate a group of panels using a sole means of activation common to all the panels in a synchronised manner.

Furthermore, the systems known due their configurations, require the application of high rotation torque on each of the secondary structures in order to carry out the rotation of each secondary structure with respect to the primary structure.

In addition, the earlier systems do not dissipate panel heat well, and therefore this increases their temperature with a concomitant reduction in performance.

This invention resolves all the previous disadvantages by having an anchoring structure which permits the one-way solar tracker to be adapted to any contours of the terrain without the need for prior calculations or actions, and a support structure of the panels which reduces the torque movement which needs to be applied on panels in order for them to rotate, all of which does not diminish its efficiency. Furthermore, it also improves the dissipation of heat in the panels with improved cooling, thus maintaining greater efficiency over longer time.

### DESCRIPTION OF THE INVENTION

This invention refers to a one-way solar tracker which enables it to be installed on all kinds of terrain reducing the torque which needs to be applied in order to make the solar panels rotate, as it is formed from a group of structures which anchor it to the ground and a group of support structures for the solar panels.

The group of ground anchoring structures comprise means of support which are anchored to the terrain where the one-way solar tracker is to be installed.

Each one of these ground anchoring structures are joined by means of a set of transfer means of movement generated by activation means which are placed on *one of the anchoring structures or either outside them, as the tracker configuration does not require the activation means to be located on its actual structure.*

The means of transfer of movement are flexible, considering flexible to be any means of transfer which permits movement to be transferred along all the ground anchoring structures, where the section of the means of transfer situated between an anchoring structure and its adjacent one may adopt any form, either curved or straight, in order to adapt to the contours of the terrain.

One the means of transfer used and which fulfils the aforementioned characteristics is a cable.

This enables the separation distance between the anchoring structures to be varied, so that structures may be placed close together with greater use of space on which the solar tracker is placed, or either anchoring structures which are distanced from each other with a greater use of solar radiation.

Furthermore, at least two of the ground anchoring structures are provided with driving means which guide the transfer means along the whole group of anchoring structures.

On each of the anchoring structures a solar panel support is arranged.

*These support structures for the solar panels are provided in turn with flexible means of transfer which are fixed to flexible means of transfer of the structure for anchoring to the ground, transferring the movement to the support structures.*

The support structures of the solar panels are linked in turn to the ground anchoring structures by means of a rotation axis which permits azimuth rotation of the solar panels following activation of the means of transfer of the support structures of the solar panels.

The support structures of the solar panels have the form of a circumference arc in the centre of which the rotation axis of the anchoring structures is housed, so that the means of transfer associated with the support structures of the solar panels are arranged on said arc and anchored to the support structure at the ends of said arc describing the trajectory imposed by the circumference arc, which reduces the roation par which needs to be applied by the means of activation in order to rotate each of the support structures and as a result the solar panels.

In this way the angular displacement of the circumference arc corresponds univocally to the means of displacement of the ground anchoring structures.

In the event that the tracker breaks down and structures are unable to follow the sun, these or the complete tracker are positioned in a safe position thus the solar radiation taken up corresponds to that of a normal fixed structure until the problem is rectified.

Should the breakdown affect any specific secondary structure, the remainder of the structures which make up the tracker can continue to track, irrespective of the faulty structure, so that the remainder of the structures of the tracker are able to continue to take up a considerable amount of solar radiation.

### DESCRIPTION OF THE DRAWINGS

This descriptive report is complemented by a set of drawings which illustrate a preferred embodiment which is in no way restrictive of the invention.

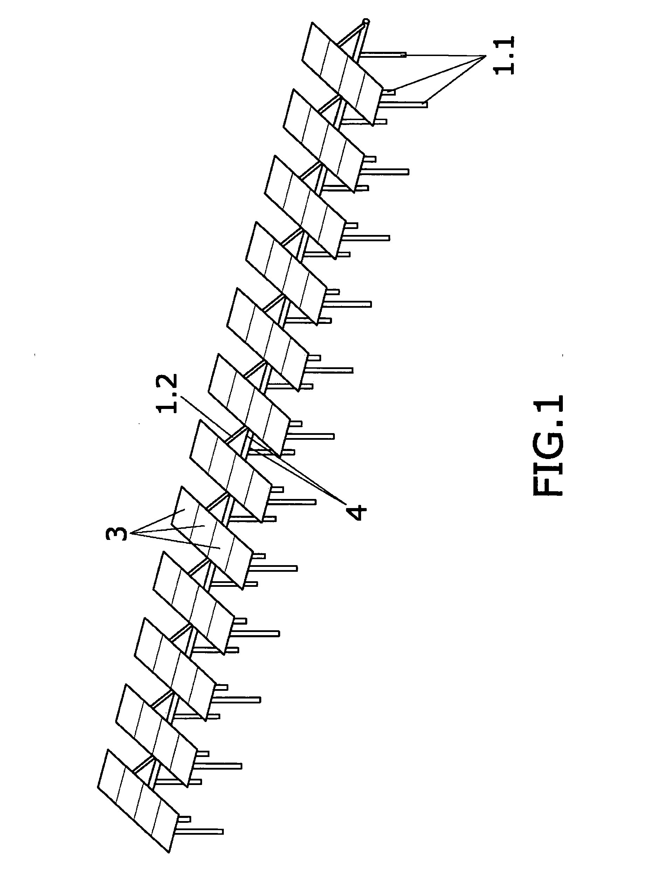

Figure 1 shows a perspective view of an embodiment of the one-way solar tracker described in this invention.
Figure 2 shows a perspective view of one of the ground anchoring structures on which a support structure of a group of panels is arranged.

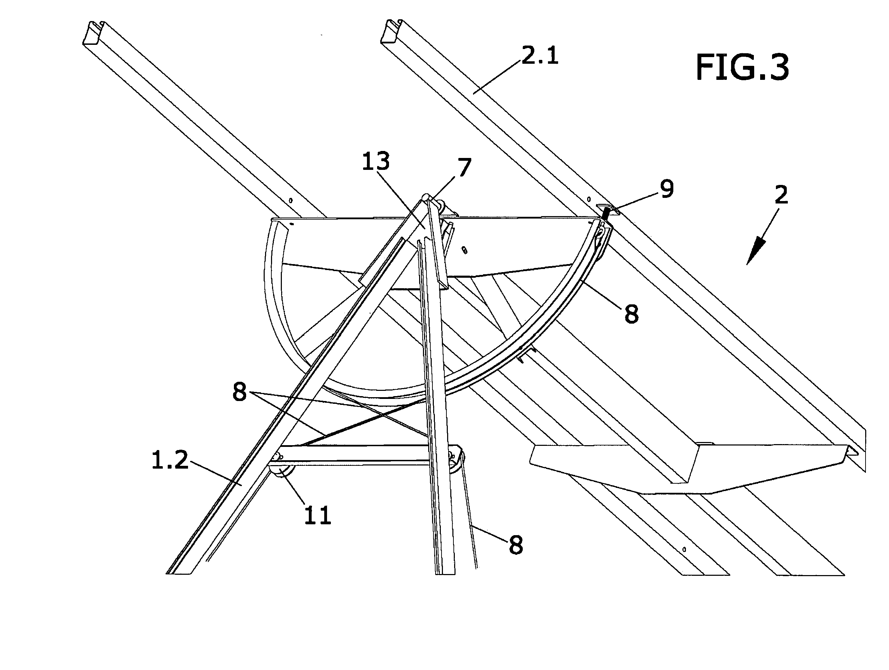

Figure 3 shows a detailed view of the support structure of Figure 2.

### PREFERRED EMBODIMENT OF THE INVENTION

In the light of the foregoing, this invention refers to a one-way solar tracker which comprises a set of ground anchoring structures (1) and a set of support structures (2) on which the solar panels (3) are arranged.

The set of anchoring structures (1) comprises a series of support means formed by three galvanised steel pillars (1.1) which form an isosceles triangle according to their projection on the ground for their anchoring to the terrain.

On each of these ground anchoring structures (1) flexible means (4) for transferring the movement generated by a motor (5) have been arranged which in turn transfers rotation to a screw (6) joined solidly through a support (6.1) and attachments (6.2) to flexible means (4) of transfer.

These flexible transfer means (4) comprise a stainless steel cable which is arranged along all the ground anchoring structures (1) and which is guided by means of a conduct (11) or pulleys arranged on each of the ground anchoring structures (1) and which guide the cable from one structure (1) to another.

The ground anchoring structures (1) are provided with two inclined bars (1.2) which emerge from two of the pillars (1.1) and form a "V" in such a way that their upper ends converge in a triangular strip or bar (1.3) which houses the rotation axis (7) of the solar panels (3), axis (7) of the anchoring structures (1) in respect of which the support structure (2) of the solar panels (3) rotates.

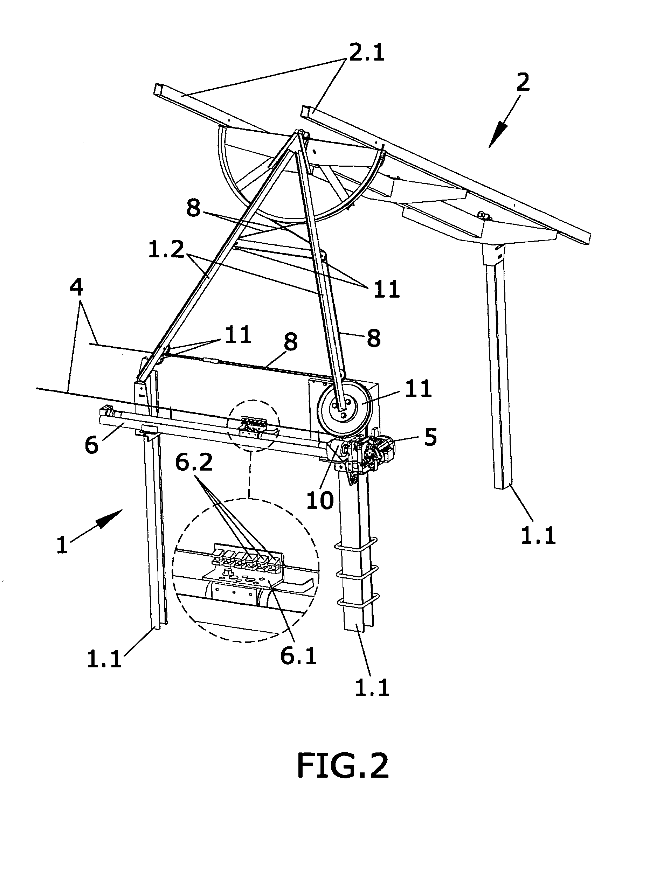

These support structures (2) of the solar panels are provided in turn with flexible transfer means (8) or steel cables which are fixed to flexible transfer means (4) or steel cables of the ground anchoring structure (1), as may be seen in Figure 2, so that the advance movement of the screw (6) is transferred to the flexible transfer means (4) or cables of the anchoring structure (1) and from these (4),to the means of flexible transfer (8) or steel cables of the support structures (2). These flexible transfer means (8) or steel cables of the support structure (2) are guided by means of conduct (11) or pulleys arranged on each of the ground anchoring structures (1).

The support structures (2) of the solar panels (3), which rest on the beams (2.1) of said structures (2), are arranged in a circumference arc in the centre of which the rotation axis (7) is situated, so that the flexible transfer means (8) or cables are arranged on said arc and anchored to the beams (2.1) of the support structure (2) on the ends of said arc, through elastic elements (9) which absorb the vibrations on the flexible transfer means (8) or cables, caused by the effects of the wind.

The tracker is furthermore provided with braking means (10) which avoid accumulation of stresses, both in the activation means (5) and in the screw (6) in conditions of strong winds.

The essential nature of this invention is not altered by variations in materials, form, size and arrangement of the component elements, which are described in a non restrictive manner, being sufficient for its reproduction by an expert.

## Claims

1. ^{a}.- One-way solar tracker comprising a group of ground anchoring structures (1) and a group of support structures (2) for solar panels (3) **characterised in that** the anchoring structures are joined by means of a set of flexible transfer means (4) which transfer movement to the support structures (2) of the solar panels(3) in such a way that said support structures (2) rotate round a rotation axis (7) of the ground anchoring structures (1).

2. ^{a}.- One-way solar tracker according to claim 1 **characterised in that** the flexible transfer means (4) are configured in such a way that the section of the transfer means (4) situated between one anchoring structure (1) and that adjacent to it (1) takes any form, albeit curved or straight, in order to adapt to the contours of the terrain.

3. ^{a}.- One-way solar tracker according to claim 2 **characterised in that** the support structures (2) of the solar panels (3) are provided in turn with flexible transfer means (8) which are fixed to flexible transfer means (4) of the ground anchoring structure (1), transferring movement to the support structures (2).

4. ^{a}.- One-way solar tracker according to claim 3 **characterised in that** the support structures(2) of the solar panels (3) are arranged in a circumference arc in the centre of which a rotation axis (7) of the anchoring structures (1) is affixed, so that the flexible transfer means (8) associated with the support structures (2) of the solar panels (3)are arranged on said arc and anchored to the support structure (2) on the ends of said arc, describing the trajectory imposed by the circumference arc.

5. ^{a}.- One-way solar tracker according to claim 1 **characterised in that** the at least two of the ground anchoring structures (1) are provided with means (11) of conduct which guide the transfer means (4) along the entire group of ground anchoring structures.

6. ^{a}.- One-way solar tracker according to claim 1 **characterised in that** the set of anchoring structures (1) is formed by a series of support means comprising three galvanised steel pillars (1.1) which form an isosceles triangle arrangement according to their projection for anchoring to the ground.

7. ^{a}.- One-way solar tracker according to claim 1 **characterised in that** the movement is generated by activation means or motor (5) which transfers rotation to a screw (6) joined solidly through a support (6.1) and attachments (6.2) to flexible transfer means (4).

8. ^{a}.- One-way solar tracker according to claim 1 **characterised in that** the means of flexible transfer (4) comprise a steel cable.

9. ^{a}.- One-way solar tracker according to claim 6 **characterised in that** the ground anchoring structures (1) are provided with two inclined bars (1.2) emerging from two of the pillars (1.1) and forming a "V" so that the upper ends converge in a triangular strip or bar (1.3) housing the rotation axis (7) of the solar panels (3).

10. ^{a}.- One-way solar tracker according to claim 4 **characterised in that** the anchoring is achieved by means of elastic elements (9) which absorb the vibrations caused to the flexible transfer means (8) by the effects of wind.

11. ^{a}.- One-way solar tracker according to claim 7 **characterised in that** it is provided with braking means (10) which prevent the accumulation of stresses both in the activation means (5) or motor and in the screw (6) in strong wind conditions.
